# EUROPÄISCHE PATENTSCHRIFT

(11) **EP 0 709 610 B1**
(45) Veröffentlichungstag und Bekanntmachung des Hinweises auf die Patenterteilung: **23.05.2001**
(21) Anmeldenummer: 95116714.7
(22) Anmeldetag: 24.10.1995
(51) Int. Cl.: F16L 11/118

(54) **Schlauchanschluss**
Pipe connection
Raccord de tuyau

(30) Priorität: 24.10.1994 DE 4437780
(43) Veröffentlichungstag der Anmeldung: 01.05.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Maier, Dieter, D-72124 Pliezhausen (DE)
(74) Vertreter: Münich, Wilhelm, Dr.

(56) Entgegenhaltungen:
- DE-A- 3 442 583
- DE-B- 1 638 976
- DE-C- 4 324 860
- DE-U- 1 848 047
- GB-A- 1 495 111

## Beschreibung

Die Erfindung bezieht sich auf einen Schlauchanschluss für einen zum Gas- oder Flüssigkeitstransport dienenden Schlauch mit einer oder mehreren Datenleitungen in seiner Schlauchwand.

Beim Transport von Gasen und/oder Flüssigkeiten werden vielfach Schlauchleitungen verwendet. Diese Schlauchleitungen bestehen häufig aus einem Kunststoffmaterial das mittels eines Extrudierverfahrens verarbeitet worden ist. Damit sind die Schlauchleitungen flexibel und können über beliebige Längen einer vorgegebenen Kontur angepaßt werden.

Die bekannten Schlauchleitungen sind jedoch nur zum Transport von Gasen und/oder Flüssigkeiten, nicht jedoch zum Transport von "zusätzlichen" Informationen geeignet. Beim Stand der Technik sind für den Transport von Informationen zusätzliche Leitungen erforderlich, die "neben" den Schlauchleitungen verlegt werden müssen.

Der Erfindung liegt die Aufgabe zugrunde, eine Schlauchanschluss für einen zum Gas- oder Flüssigkeitstransport geeigneten Schlauch derart weiterzubilden, daß zusätzlich zum Transport des oder der Fluide der Transport von Informationen bzw. Signalen möglich ist, ohne daß zusätzliche Leitungen dafür verlegt werden müssen.

Eine erfindungsgemäße Lösung dieser Aufgabe ist im Patentanspruch 1 angegeben. Weiterbildungen der Erfindung sind Gegenstand der Ansprüche 2 folgende.

Erfindungsgemäß wird diese Aufgabe dadurch gelöst, dass der Zugang zu diesen Datenleitungen über einen Klemmring als Isolator erfolgt. Der Klemmring weist dabei an seiner Innenseite auf die Schlauchleitung abgestimmte elektrisch leitende Elemente auf, die den Schlauch bis zur Datenleitung durchdringen und eine lösbar leitende Verbindung herstellen.

Diese Leitung(en) können in den Körper eingebettet oder in einer Verstärkung des Mantels angeordnet sein. Im letzteren Falle können die Leitung(en) an dem Körper lösbar angebracht und insbesondere angeclipst sein.
Die Leitung(en) können elektrische Leitungen für die Übertragung von Energie oder (bevorzugt) elektrischen Signalen bzw. Informationen und/oder optische Leitungen, wie beispielsweise Glasfaserleitungen sein.

Aus der DE- A1-3 442 583 ist ein flexibler Schlauch zum Leiten eines Strömungsmittels mit mindestens einer in der Schlauchwand integrierten Steuerleitung. Diese Druckschrift beschreibt einen Schlauchanschluß für einen zum Gas- oder Flüssigkeitstransport dienenden Schlauch mit einer in seiner Schlauchwand eingebrachten Drahtgeflechteinlage, das von einem Dorn eines flachen metallischen Körpers des Schlauchanschlusses durchstochen wird. Der flache metallische Körper und die Drahtgeflechteinlage dienen zur Verhinderung elektrostatischer Aufladungen des Schlauches.

Weiterhin sind Schläuche mit einer oder mehreren elektrischen Leitungen in der Schlauchwand bekannt. Die Leitungen haben dabei voneinander entlang des Schlauchumfangs einen definierten Abstand.

Aus der DE 3442583 A 1 ist ein flexibler Schlauch zum Leiten eines Strömungs-mittels, mit mindestens einer in einer Schlauchwandung integrierten Steuerleitung bekannt. Bei dieser Lösung ist in einem flexiblen Schlauch zum Leiten eines Strömungsmittels ist mindestens eine in einer Schlauchwandung integrierte Steuerleitung vorgesehen, die zur Verbindung eines Signalgebers mit einem von diesem entfernten Betätigungsglied bzw. Umsetzer dient. Damit soll insbesondere das Strömungsmittel gesteuert werden, welches durch den flexiblen Schlauch geleitet wird. Als Steuerleitung wird ein Lichtleiter verwendet, der an einer ersten Schlauchstelle an einen optischen Signalgeber anschließbar ist und an einer zweiten Schlauchstelle zum Anschluß an einen opto-elektronischen Umsetzer ausgebildet ist . An den Umsetzer kann ein elektrisches Betätigungsglied (z. B. Steuereinrichtung) ohne Gefährdung der Bedienungsperson des Schlauches und des Signalgebers angeschlossen sein.

In jedem Falle ist es bevorzugt, wenn die Kontaktierung der Leitungen stirnseitig erfolgt.

Die zusätzlich zum Transport des Fluids übertragenen Informationen können dem Fluid-Transportvorgang zugeordnet werden. Ferner ist es möglich, die zusätzlichen Leitungen für Meßvorgänge, wie z.B. für die Messung von Temperatur, Druck, Dichte etc. zu verwenden. Selbstverständlich ist es möglich, über die Leitungen vollständig vom Fluidtransport unabhängige Informationen zu übertragen. Diese Informationen können an beliebigen Orten eingespeist bzw. entnommen werden.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: ein erstes Ausführungsbeispiel der Erfindung mit in den Schlauchkörper fest eingebetteten Leitungen,
- Fig. 2: ein zweites Ausführungsbeispiel der Erfindung mit nachträglich angeclipsten Leitungen, und
- Fig. 3: und 4 die Kontaktierung einer erfindungsgemäßen Schlauchleitung.

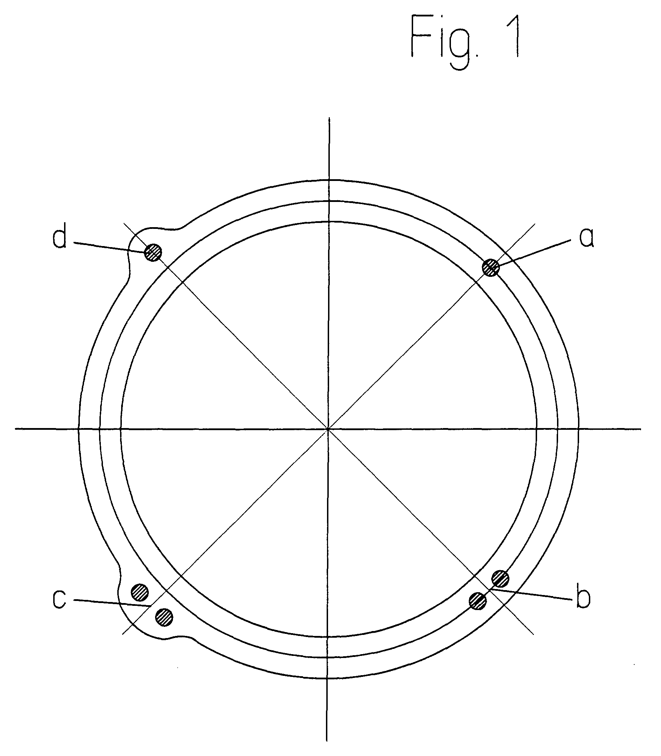

Fig. 1 zeigt ein erstes Ausführungsbeispiel der Erfindung, bei dem die zusätzliche Leitung bzw. Leitungen fest in den Schlauchkörper eingebracht sind. Dies ist beispielsweise dadurch möglich, daß die Leitung(en) während des Extrusionsvorgangs mit eingegossen werden. Sollte die Minderung des Querschnitts des Schlauchkörpers nicht erwünscht sein, so ist es möglich, die Leitungen in einer Verstärkung des Mantels unterzubringen.

In Abhängigkeit von der Leitungsdicke und der Minderung des Querschnitts wird der Querschnitt an der äußeren Mantelfläche - wenn nötig - verstärkt. Die Verstärkung erfolgt bevorzugt nicht an der inneren Mantelfläche, da der innere Querschnitt glatt und insbesondere kreisrund sein sollte. Durch den glatten Querschnitt ergibt sich nicht nur ein optimaler Transport des Mediums, sondern es wird auch das Einbringens der in der Regel kreisrunden Schlauchendstücke, wie Tüllen, Nippel, Anschlußstücke, Kupplungen etc. erleichtert.

In Fig. 1 sind verschiedene Ausführungsformen des ersten Ausführungsbeipiels dargestellt:

Mit a ist ein eingegossener Leiter ohne Mantelverstärkung bezeichnet, während b zwei eingegossene Leiter ebenfalls ohne Mantelversätrkung bezeichnet. Mit c und d sind ein bzw. zwei Leiter mit Verstärkung des Schlauchmantels bezeichnet.

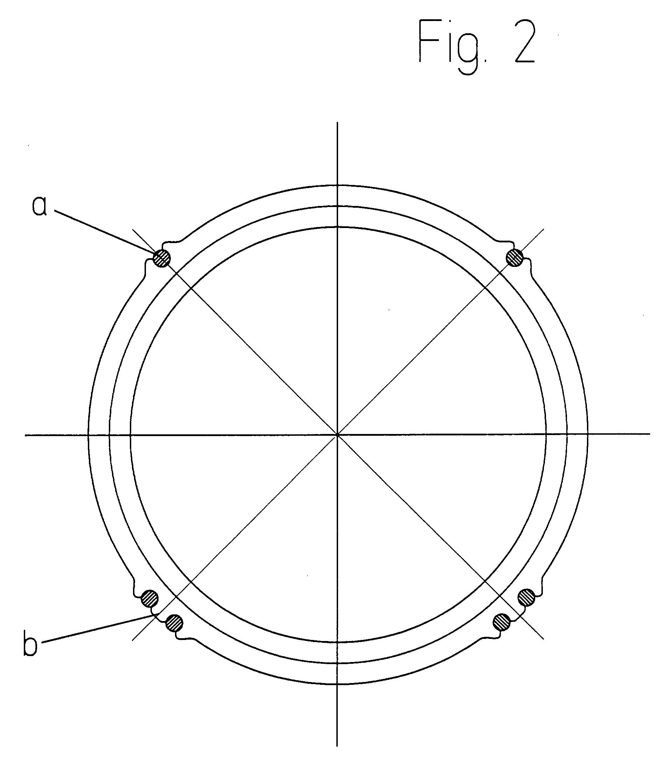

Fig. 2 zeigt ein weiteres Ausführungsbeispiel der Erfindung, bei dem Datenträgerleitungen in vorbereitete Aussparungen am Außenumfang des Schlauchkörpers eingeclipst sind. Mit a ist eine Stelle bezeichnet, an der eine Datenträgerleitung eingebracht ist. b bezeichnet eine Stelle, an der zwei Datenträgerleitungen am Schlauchkörper angeclipst sind.

Das in Fig. 2 dargestellte Ausführungsbeispiel kann beispielsweise dadurch hergestellt werden, daß beim Extrusionsvorgang - z.B. durch Einbringen von Formelementen im Werkzeug - an der äußeren Mantelfläche des Schlauches eine oder mehrere Kavernen ausgebildet werden, die so gestaltet sind, daß zu dieser Kaverne im Durchmesser abgestimmte Datenleitungen nachträglich "eingeclipst" werden können und dort eine wieder lösbare Verbindung einnehmen. Die Verbindung ist so abgestimmt, daß sich beim erfindungsgemäßen Einsatz des Schlauches die Datenleitung nicht von selbst löst. Einbringen und Entnehmen der Datenleitung erfolgt über geeignete Hilfswerkzeuge. Auch hier ist die Anzahl der Datenträgerleitungen am Umfang und deren Querschnitt beliebig.

Es können sowohl die klassischen Leitermaterialien, wie Kupfer, Aluminium etc. verwendet werden, als auch Glasfaserkabel, sowie jede aus anderem Material gestaltete Leitung, sofern sie sich in den Kunststoff einbetten läßt.

Dabei ist es von dem jeweiligen Einsatzgebiet abhängig, ob die Datenleitung zusätzlich eine eigene isolierende Ummantelung besitzt oder die Schlauchleitung die isolierende Ummantelung darstellt.

Bei der eingebetteten Leitung ist es zudem nützlich, wenn die Leitung "gekräuselt" eingebracht wird, d.h. die unterschiedlichen Ausdehnungskoeffizienten der Materialien werden dadurch ausgeglichen, daß die Datenleitung durch wellenförmige Ausführung geringfügig "atmen" kann. Dabei sind insbesondere vieladrige und verdrillte Leitungen vorteilhaft.

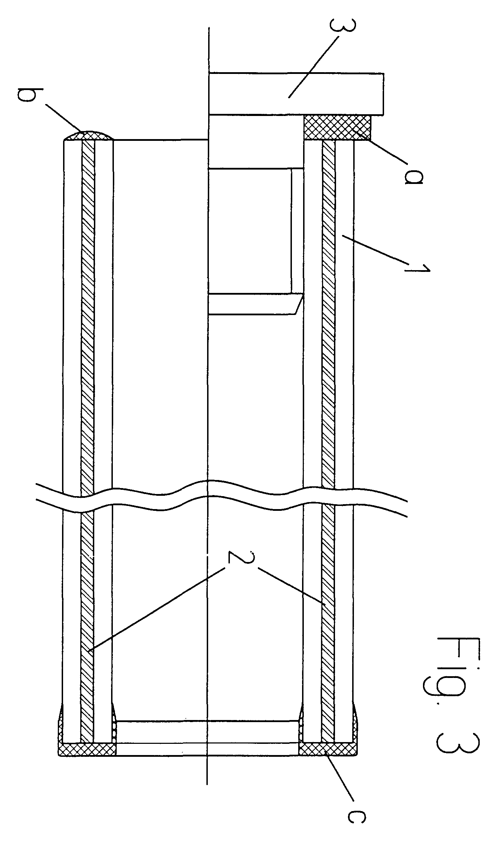

Fig. 3 zeigt, daß in der Regel eine Schlauchleitung 1 und somit auch die eingesetzten Datenleitungen 2 am Ende nur gemeinsam abgeschnitten werden. Diese Enden liegen nun frei und müssen in Abhängigkeit von der Umgebung geschützt werden. Dies kann durch eine Reihe von Maßnahmen erfolgen, wie beispielsweise:
- eine einfache Isolationsscheibe a, sofern danach eine Anlagefläche vorhanden ist,
- das Aufbringen eines Klebers b auf der Stirnseite des Schlauches, abgestimmt auf das Schlauchleitungsmaterial,
- das Aufbringen einer sehr dünnen Isolierkappe c, z.B. mittels Heißkleber oder thermisch oder durch Aufbördelung. Hierbei ist die Kappenfläche in der Schlauchinnenwand zusätzlich noch wie ein Dichtring ausgebildet.

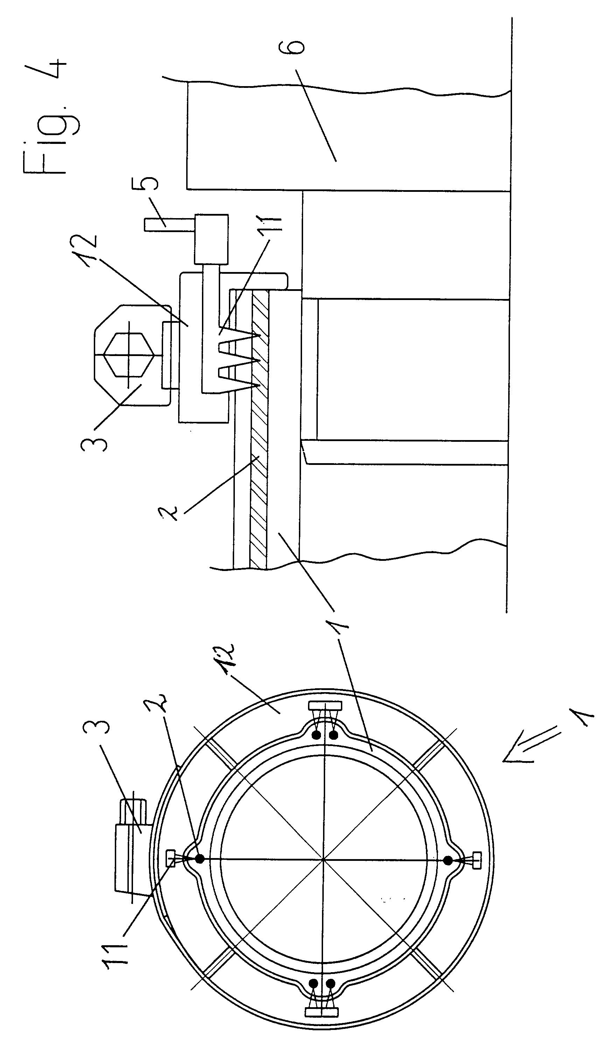

Fig. 4 zeigt, daß mit einem speziellen, geteilten Klemmringes 3, der auf die Geometrie des Schlauches 1 und die Anzahl der Datenleitungen 2 abgestimmt ist, die Information abgenommen und gleichzeitig das Schlauchende bezüglich der Datenlei-tungsenden abisoliert werden kann. Der Klemmring 3 ist ein Isolator, welcher an den entsprechenden Stellen an seiner Innenseite auf die Schlauchleitung abgestimmte elektrisch leitende Elemente 11, wie z.B. Nadelkämme besitzt, die den Schlauchkörper 1 gerade so tief durchdringen, daß sie sicher die Datenleitung 2 treffen und mit ihnen eine lösbare leitende Verbindung herstellen.

Diese leitenden Elemente 11 sind in den Klemmring 3 dergestalt eingegossen, daß die nadelförmigen Kammelemente 11 aus dem Klemmring 3 an den Stellen herausschauen, an denen sich eine Datenleitung 2 befindet. Dazu ist der Klemmring an seiner Innenseite exakt so gestaltet wie der Schlauch 1 an seiner Außenseite, so daß ein Formschluß entsteht.

Bei einfach eingelegten Drähten - siehe Fig. 2a und b - ist die Mantelfläche des Schlauchs 1 rund, entsprechend sind im zugehörigen Klemmringsegment keine Einsparungen vorgesehen. Um dennoch eine sichere Kontaktierung zu ermöglichem ist der Schlauch an der leitungsführenden Oberfläche durch eine farbige Linie in Längsrichtung markiert; damit kann man den Nadelkamm exakt positionieren.

Die stromführenden Teile des Klemmringes werden nach außen geführt in Form einer Steckerkupplung 5, auf welche dann ein Stecker oder ein beliebig geformtes Kupplungs-element aufgesteckt werden kann, das zur Weiterführung der Datenleitung dient.

Mit 6 ist ein in den Schlauch 1 eingesetzter Verbindungsnippel bezeichnet.

Der Klemmring ist in n Segmente 12 geteilt, wobei die Anzahl der Teilungen n abhängig ist von der Anzahl der Einspeisstellen. Hierdurch wird erfindungsgemäß erreicht, daß z.B. ein Schlauchbinder, der beim Anziehen radial nach innen auf die Segmente 12 wirkt, die Segmente 12 zusammenzieht und zwar gerade so viel, bis die Nadeln der Elemente 11 eingedrungen sind und die Auflagefläche so groß wird, daß der Schlauchbinder nur noch soviel Radialkraft aufbringen kann, daß ein Abdichteffekt durch Kraft- und Formschluß z.B. auf dem Nippel 6 erreicht wird.

Diese konstruktive Ausgestaltung begrenzt somit die Eindringtiefe der Nadeln exakt auf das gewünschte Maß.

In einer technischen Abwandlung ist der Klemmring an jeder beliebigen Schlauchleitungsstrecke zum Einspeisen und Entnehmen der Daten verwendbar. Dies gilt auch, um z.B. Verbraucher, welche in die Schlauchleitung eingebracht werden, zu überbrücken.

Sinnvoll hierbei ist z.B. ein Schlauchhalter, welcher gleichzeitig Einspeisstelle ist. Er entspricht in seiner technischen Ausführung Fig. 4, ist jedoch mit einer Halterung zum Befestigen an einem beliebigen Befestigungspunkt versehen.

Selbstverständlich ist es erfindungsgemäß möglich, die Datenleitungen so zu verstärken, daß sie nicht nur Signalströme transportieren, sondern auch Leistungsströme, so daß z.B. direkt Ventile - die z.B. das in der Schlauchleitung transportierte Fluid schalten - geschaltet werden können oder Stellmotoren etc. angetrieben werden. In einer Mischform aus Signalleitungen und leistungsübertragenden Leitungen an einem Schlauch ergeben sich neue Einsatzgebiete.

Über die Datenleitungen selbst können für den Schlauch mit Meßgeräten verbunden werden. Die Leitung können auch selbst Sensoren sein, z.B. temperaturempfindliche Heißleiter, druckempfindliche Leiter oder schallübertragende Leitungen etc.. Dabei kann erfindungsgemäß zudem noch ausgenützt werden, daß über geeignete Meßmethoden (z.B. Laufzeitmessungen) der Störort an der Datenleitung erfaßt und lokalisiert werden kann.

Die Datenleitungen können durch geeignete Sensoren (z.B. spezielle Spulen) auch berührungslos abgetastet werden, so daß es nicht notwendig sein muß, die Oberfläche des Schlauches durch die Nadelkämme zu beschädigen. Dies wird insbesondere erleichtert, wenn man spezielle Datenleitungen und hochfrequente Signale verwendet.

Die Oberfläche des Schlauches kann mit einer besonderen Schicht ausgestattet sein, welche sich wieder verschließt, wenn man die Nadelkämme des Klemmrings herauszieht. Diese selbstdichtenden Kunststoffe sind bekannt.

Durch Symmetrierung und Standardisierung der Schläuche und deren Datenleitungen ist es möglich, die Klemmringe in Segmentbauweise nach dem Baukastenprinzip aufzubauen, so daß es möglich ist, unterschiedliche Klemmringsegmente zu einem Kreis für einen bestimmten Schlauch aufzubauen.

Der Schlauch selbst kann zum Transport beliebiger Fluide, wie Gasen, Flüssigkeiten, aber auch Schüttgut eingesetzt werden.

## Patentansprüche

1. Schlauchanschluss für einen zum Gas- oder Flüssigkeitstransport dienenden Schlauch mit einer oder mehreren Datenleitungen (2) in seiner Schlauchwand,
dadurch **gekennzeichnet,** dass der Zugang zu diesen Datenleitungen (2) über einen Klemmring (3) als Isolator erfolgt, der Klemmring (3) an seiner Innenseite auf die Schlauchleitung abgestimmte elektrisch leitende Elemente (11) aufweist, die den Schlauch (1) bis zur Datenleitung (2) durchdringen und eine lösbare leitende Verbindung herstellen.

2. Schlauchanschluss nach Anspruch 1,
dadurch **gekennzeichnet,** dass die Kontakte zur Herstellung der Verbindung vom Klemmring (3) bis zu den Datenleitungen (2) in der Schlauchwand eindrückbare Nadeln oder Nadelkämme sind.

3. Schlauchanschluss nach Anspruch 1 und 2,
dadurch **gekennzeichnet,** dass zwischen benachbarten Nadelkämmen Abstandhalter vorgesehen sind.

4. Schlauchanschluss nach Anspruch 3,
dadurch **gekennzeichnet,** dass die Abstandhalter Radialstege sind.

5. Schlauchanschluss nach einem der Ansprüche 1 bis 4,
dadurch **gekennzeichnet,** dass der Klemmring (3) ein Schlauchbinder ist.

6. Schlauchanschluss nach einem der Ansprüche 1 bis 5,
dadurch **gekennzeichnet** dass der Klemmring (3) an seiner Innenseite exakt so gestaltet ist wie der Schlauch (1) an seiner Außenseite, so dass ein Formschluss entsteht.

7. Schlauchanschluss nach Anspruch 1 bis 6,
dadurch **gekennzeichnet,** dass der Klemmring (3) aus mehreren Teilringsegmenten besteht.

8. Schlauchanschluss nach Anspruch 7,
dadurch **gekennzeichnet,** dass unterschiedliche Klemmringsegmente (3) nach einer festgelegten Symmetrierung / Standardisierung der Schläuche und deren Datenleitungen (2) in Segmentbauweise nach dem Baukastenprinzip aufgebaut sind, so dass es möglich ist, diese Teilringsegmente zu einem Kreis für jeweils bestimmte Schläuche zusammenzusetzen.

## Claims

1. Tube connector for connection of a tube provided for conveying gases or liquids and comprising one or several data lines (2) in its tube wall,
**characterised** in that the access to these data lines (2) is made via a clamping ring (3) as insulator, that said clamping ring (3) comprises electrically conductive elements (11) on its inside which are matched with the tube assembly and which penetrate said tube (1) up to said data line (2) and establish a detachable conducting connection.

2. Tube connector according to Claim 1,
**characterised** in that the contacts for establishing the connection from said clamping ring (3) to said data lines (2) are needles or needle combs adapted to be pressed into the tube wall.

3. Tube connector according to Claims 1 and 2,
**characterised** in that spacers are provided between adjacent needle combs.

4. Tube connector according to Claim 3,
**characterised** in that said spacers are radial webs.

5. Tube connector according to any of the Claims 1 to 4,
**characterised** in that said clamping ring (3) is a band clamp fitting.

6. Tube connector according to any of the Claims 1 to 5,
**characterised** in that said clamping ring presents on its inside precisely the same shape as the tube (1) on its outside so as to establish a positive locking.

7. Tube connector according to the Claims 1 to 6,
**characterised** in that said clamping ring (3) is composed of several sectional ring segments.

8. Tube connector according to Claim 7,
**characterised** in that different clamping ring segments (3) are designed to present a modular segmented structure in correspondence with a fixed balancing/standardisation of said tubes and their data lines so that it is possible to compose these sectional ring segments to form a circle for respectively defined tubes.

## Revendications

1. Raccord de tuyau à raccorder un tuyau servant au transport des gaz ou des liquides et comprenant une ou plusieurs lignes de données (2) dans sa paroi de tuyau,
**caractérisé** en ce que l'accès à ces lignes de données (2) se fait via un anneau de serrage (3) comme isolateur, que ledit anneau de serrage (3) comprend des éléments électriquement conductibles (11) sur sa face intérieure, qui sont accordés à la tuyauterie et qui pénètrent à travers ledit tuyau (1) jusqu'à ladite ligne de données (2) en établissant une connexion conductible amovible.

2. Raccord de tuyau selon la revendication 1,
**caractérisé** en ce que les contacts à établir la connexion dudit anneau de serrage (3) auxdites lignes de données (2) sont des aiguilles ou peignes à aiguilles, qui sont aptes à être pressés dans la paroi de tuyau.

3. Raccord de tuyau selon les revendications 1 et 2,
**caractérisé** en ce que des écarteurs sont disposés entre des peignes à aiguilles voisins.

4. Raccord de tuyau selon la revendication 3,
**caractérisé** en ce que lesdits écarteurs sont des entretoises radiales.

5. Raccord de tuyau selon une quelconque des revendications 1 à 4,
**caractérisé** en ce que ledit anneau de serrage (3) est un collier de serrage.

6. Raccord de tuyau selon une quelconque des revendications 1 à 5,
**caractérisé** en ce que ledit anneau de serrage présent à sa face intérieure une forme précisément égale à la forme du tuyau (1) du côté extérieur du dernier afin d'établir une fermeture géométrique.

7. Raccord de tuyau selon les revendications 1 à 6,
**caractérisé** en ce que ledit anneau de serrage (3) est composé de plusieurs segments élémentaires de bague.

8. Raccord de tuyau selon la revendication 7,
**caractérisé** en ce que des segments élémentaires de bague (3) différents sont conçus de façon qu'ils présentent une structure segmentée modulaire en correspondance avec un équilibrage/normalisation fixe desdits tuyaux et leurs lignes de données d'une manière qu'il soit possible de composer ces segments élémentaires de bagues de façon à former un cercle pour des tuyaux respectivement définis.
